(19) Europäisches Patentamt
European Patent Office
Office européen des brevets

(11) **EP 3 842 125 B1**

(12) **EUROPEAN PATENT SPECIFICATION**

(45) Date of publication and mention of the grant of the patent:
**10.12.2025 Bulletin 2025/50**

(21) Application number: **21155452.2**

(22) Date of filing: **23.06.2017**

(51) International Patent Classification (IPC):
***B01D 53/34*** (2006.01)      ***B01D 53/50*** (2006.01)

(52) Cooperative Patent Classification (CPC):
**B01D 53/346; B01D 53/50;** B01D 2252/102;
B01D 2252/103

(54) **AUTOMATIC AMMONIA-ADDING SYSTEM AND METHOD FOR AMMONIA-BASED DESULFURIZATION DEVICE**

SYSTEM ZUR AUTOMATISCHEN ZUGABE VON AMMONIAK UND VERFAHREN FÜR AMMONIAKBASIERTE ENTSCHWEFELUNGSVORRICHTUNG

SYSTÈME ET PROCÉDÉ D'AJOUT D'AMMONIAQUE AUTOMATIQUE POUR DISPOSITIF DE DÉSULFURISATION À BASE D'AMMONIAQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.06.2017 CN 201710446925**

(43) Date of publication of application:
**30.06.2021 Bulletin 2021/26**

(62) Document number(s) of the earlier application(s) in accordance with Art. 76 EPC:
**17177646.1 / 3 415 222**

(73) Proprietor: **Jiangnan Environmental Protection Group Inc.
Grand Cayman (KY)**

(72) Inventors:
• LUO, Jing
  NANJING, Jiangsu, CN-211100 (CN)
• WANG, Jinyong
  NANJING, Jiangsu, CN-211100 (CN)
• ZHANG, Jun
  NANJING, Jiangsu, CN-211100 (CN)

(74) Representative: **Croce, Valeria et al
Jacobacci & Partners S.p.A.
Via Senato, 8
20121 Milano (IT)**

(56) References cited:
CN-A- 106 422 705      CN-U- 203 253 348
CN-U- 205 650 071      JP-A- 2009 279 490

## Description

## Technical Field

The present invention belongs to the field of environmental protection technologies, and in particular to an automatic ammonia-adding system and method for an ammonia-based desulfurization device.

## Background Art

At present, limestone desulfurization process and ammonia-based desulfurization process are mainstream processes in the whole world for removing sulfur dioxide from gases. In the limestone desulfurization process, large quantities of waste water and gypsum residues are produced during desulfurization, and a lot of investment and operating costs are required to treat these waste water and waste residues. Also, in the limestone desulfurization process, while 1 ton of sulfur dioxide is removed, about 0.7 ton of carbon dioxide is produced synchronously. With the ammonia-based desulfurization process, basically no waste water or waste residue is produced, and the added ammonia desulfurizer is converted into a useful ammonium sulfate fertilizer, thus it is more economical and more environmentally friendly. However, the existing ammonia-based desulfurization process often has the problems, such as ammonia slip, aerosol formation, etc.

Chinese patents CN 1283346C and CN 1321723C disclose a process for removing $SO_2$ from coal-fired flue gas by using ammonia as a removal agent, in which the $SO_2$ concentration in the clean gas is less than 100 mg/Nm$^3$. However, the amount of ammonia slip in the clean gas can be up to 12 mg/Nm$^3$.

Chinese Patent CN 100428979C discloses an ammonia-based desulfurization process with crystallization inside a tower and an apparatus thereof, wherein the desulfurization tower is designed to be of a multi-section structure, successively including an oxidation section, a crystallization section, a cooling absorption section, a main absorption section, and a dehydration-demisting section from bottom to top. In the process, the evaporating ability of a flue gas is utilized for crystallization to reduce operation energy consumption, the $SO_2$ concentration in the clean gas is less than 200 mg/Nm$^3$, and the ammonia content in the clean gas can be as low as 3 mg/Nm$^3$.

Chinese patent application No. CN 201710154157.3 discloses a method and a device for ammonia-based removal of sulfur oxides and dust from gas, wherein the device consists of a gas purification and removal system, an oxidation system, an ammonium sulfate post-processing system, an ammonia supply system and an auxiliary system, and uses a process of multipoint ammonia addition and multi-stage control, thereby significantly inhibiting ammonia slip and aerosol formation, and achieving efficient desulfurization and dedusting effects.

Chinese patent application No. CN 201610322999.0 discloses a pH-based automatically adjusting ammonia addition system, mainly including a control cabinet, an aqueous ammonia tank, a first aqueous ammonia pump, a second aqueous ammonia pump, a pressure transmitter, an electromagnetic flowmeter, an electric control valve and a pH transducer, wherein the control cabinet is respectively connected to the pressure transmitter, the electromagnetic flowmeter, the electric control valve, and the pH transducer; the control cabinet is connected to the first aqueous ammonia pump and the second aqueous ammonia pump; the inlet end of the first aqueous ammonia pump is connected to the aqueous ammonia tank and the outlet end of the first aqueous ammonia pump is respectively connected to an inlet of an ammonia-mixing chamber and an inlet of a circulating pump; the first aqueous ammonia pump is respectively connected to the pressure transmitter, the electromagnetic flowmeter, the electric control valve and the pH transducer; the inlet end of the second aqueous ammonia pump is connected to the aqueous ammonia tank and the outlet end of the second aqueous ammonia pump is respectively connected to the inlet of the ammonia-mixing chamber and the inlet of the circulating pump; the second aqueous ammonia pump is respectively connected to the pressure transmitter, the electromagnetic flowmeter, the electric control valve and the pH transducer; and the electric control valve is respectively connected to the inlet of the ammonia-mixing chamber and the inlet of the circulating pump.

Chinese patent application No. CN 203 253 348 discloses a method for the desulphurization of flue gas, which is based on a real-time measurement of SO2 outlet to adjust the ammonia addition.

Japanese patent application JP 2009279490A discloses a system and a method to adjust the amount of ammonia injected in the flue gas.

An automatic ammonia-adding system with stable and reliable system operation, a high automation degree and a simple process and being applicable to an ammonia-based desulfurization device is still required to achieve automatic multipoint ammonia addition and multi-stage control in the ammonia-based desulfurization device, and inhibit ammonia slip and aerosol formation.

## Summary of the Invention

An object of the present invention is to provide an ammonia-based desulfurisation device comprising an automatic ammonia-adding system according to claim 1 with stable and reliable system operation, a high automation degree and a simple process . The automatic ammonia-adding system can be especially used with a method and a device for ammonia-based removal of sulfur oxides and dust from gas as disclosed in Chinese patent application No. CN 201710154157.3.

A further object of the present invention is to provide a method of automatic ammonia-addition applicable to an ammonia-based desulfurization device according to claim 5.

**Brief Description of the Drawings**

Drawings are provided to assist in understanding of the present invention. However, the drawings are not intended to limit the present invention in a manner inconsistent with the claims. In the drawings,

Fig. 1 is a schematic diagram of an embodiment of the present invention.
Fig. 2 is a control scheme of automatic ammonia addition in accordance with an embodiment of the present invention.

**Description of the Preferred Embodiments**

The present invention provides an ammonia-based desulphurization device comprising an automatic ammonia-adding system, the automatic ammonia-adding system automatically calculating a theoretical amount of ammonia based on gas amounts provided by an inlet Continuous Emission Monitoring System (CEMS) and an outlet CEMS of the ammonia-based desulfurization device or an associated gas amount a $SO_2$ concentration provided by the inlet CEMS, and a predetermined $SO_2$ concentration of the outlet CEMS; calculating a corrected theoretical amount of ammonia using half of the ratio of the actual amount of added ammonia to the actual amount of removed sulfur dioxide as a correction coefficient for the theoretical amount of ammonia; and adding an ammonia absorbent equivalent to the corrected theoretical amount of ammonia $\pm 10\%$, preferably $\pm 5\%$, more preferably $\pm 3\%$, and still more preferably $\pm 2\%$, to the ammonia-based desulfurization device through an ammonia metering means and an ammonia control valves, and then automatically controlling the actual ammonia flow rate based on the actual $SO_2$ concentration and change trend provided by the outlet CEMS as a feedback to allow the outlet $SO_2$ concentration to tend towards the predetermined $SO_2$ concentration, thereby achieving automatic ammonia addition.

The gas amounts of the inlet and outlet CEMSs (or associated gas amounts), the $SO_2$ concentrations of the inlet and outlet CEMSs, and the data of the ammonia metering are uploaded to a distributed control system to calculate the actual amount of added ammonia and the actual amount of removed sulfur dioxide, and then calculate the theoretical amount of ammonia, the correction coefficient for the amount of ammonia, and the corrected theoretical amount of ammonia.

The theoretical amount of ammonia, the correction coefficient for the theoretical amount of ammonia, and the corrected theoretical amount of ammonia are calculated as follows:

theoretical amount of ammonia = (gas amount of the inlet CEMS or associated gas amount (Nm$^3$/h)* inlet $SO_2$ concentration (mg/Nm$^3$) - gas amount of the outlet CEMS or associated gas amount (Nm$^3$/h)* predetermined $SO_2$ concentration of the outlet CEMS (mg/Nm$^3$))/1000/1000/64*34 kg/h correction coefficient for theoretical amount of ammonia = actual molar number of added ammonia/actual molar number of removed sulfur dioxide/2 corrected theoretical amount of ammonia = theoretical amount of ammonia * correction coefficient for theoretical amount of ammonia

In the automatic ammonia-adding system of the present invention, slopes of temporal curve of the outlet $SO_2$ concentration value can be used as steps to judge the outlet $SO_2$ concentration change trend, i.e., different further correction coefficients can be set at different slopes (outlet $SO_2$ concentration change trend, e.g. less than 0, 0-1, 1-2, etc.) using a slope of temporal curve of the outlet $SO_2$ value as the basis for consideration.

The ammonia-based desulfurization device further comprises an absorption tower 1 and an oxidation section 9. The automatic ammonia-adding system includes an ammonia supply system 2, an ammonia control valve 3, an ammonia flow meter 4, a circulating pump 6, an inlet CEMS 7, an outlet CEMS 8 and a Distributed Control System (DCS).

The ammonia supply system provides an ammonia absorbent, which is one or more of liquid ammonia, an aqueous ammonia and gaseous ammonia.

The automatic ammonia-adding system of the present invention includes one or more ammonia control valves, preferably at least 2 ammonia control valves with different control abilities, wherein a control valve with a large control ability is used to control the addition of 90-99% of corrected theoretical amount of ammonia, and a control valve with a small control ability is used for automatic feedback adjustment and control.

In some embodiments, the ammonia metering means is a flow meter, e.g. a volumetric flow meter or a mass flow meter, or a metering pump.

In some embodiments, the measured items for the inlet CEMS may include gas amount, $SO_2$ concentration, water content, dust content, temperature and pressure.

In some embodiments, the measured items for the outlet CEMS may include gas amount, $SO_2$ concentration, water content, dust content, temperature, pressure, nitrogen oxides content and free ammonia content. associated gas amounts, i.e. gas amounts calculated from a boiler load, a boiler air volume can be used to substitute for the gas amounts of inlet and outlet CEMSs, or gas amounts of the inlet and outlet CEMSs can be used to substitute for each other, and the water contents, temperatures and pressures of the inlet and outlet CEMSs can be used for gas amount correction calculation.

In a specific embodiment of the present invention, the ammonia-based desulfurization device comprises an absorption tower controlled section-wise, which tower is divided into an oxidation section, a cooling-and-washing section, a washing desulfurization section, and a fine particulate matters control section, wherein the cooling-and-washing section, the washing desulfurization section, and the fine particulate matters control section are respectively provided with a number of spray layers, the cooling-and-washing section concentrates the circulated washing liquid while cooling the raw flue gas, the washing desulfurization section removes by absorption sulfur dioxide in the flue gas, controls ammonia slip and aerosol formation, and the fine particulate matters control section scrubs off the fine particulate matters.

The ammonia-based desulfurization device uses multipoint ammonia addition so that the reaction is carried out sufficiently, and ammonia slip and aerosol formation can be avoided. The ammonia-containing desulfurization agent is added at the following locations: upper and lower layers of the oxidation section, inlet and outlet of the circulating pump, and the cooling-and-washing section.

In the liquid distributor of the washing desulfurization section, the liquid-to-gas ratio in each layer is not less than 1 $L/m^3$, the spray coverage in each layer is not less than 130%, and the total spray coverage in the washing desulfurization section is not less than 300%.

In the fine particulate matters control section, the liquid-to-gas ratio in each layer is not less than 0.8 $L/m^3$, and the spray coverage is not less than 110%.

The upper part of the absorption section and the upper part of the fine particulate matters control section are respectively provided with a layered demister. The demister is selected from a corrugated board, a filler, a baffle, a ridge, a screen, or a combination thereof. In some embodiments, the ammonia-based desulfurization device comprising the automatic ammonia-adding system of the present invention runs as follows:

> a raw flue gas enters from the middle-lower part of an absorption tower, and is then emitted from a flue gas outlet on the top of the tower successively after cooling-and-washing, washing for desulfurization, and removing fine particulate matters by a washing liquid circulated by a circulating pump; and
> an ammonia supply system supplements an ammonia absorbent by an ammonia control valve to predetermined ammonia-adding points such as an oxidation section of the absorption tower, a circulating pump, etc., thereby achieving automatic ammonia addition to the desulfurization system.

The circulating washing liquid can be concentrated (crystallized) in the cooling-and-washing process, and then processed to an ammonium sulfate product through an ammonium sulfate post-processing system. The ammonium sulfate post-processing system can include 1-3 stages of solid-liquid separators, a drier, and packaging machine connected successively.

The circulating liquid for absorption is oxidized by an oxygen-containing gas in the oxidation section, whereby at least a portion of sulfite contained therein is oxidized into sulfate. In some embodiments, the oxidation rate of the upper solution of the oxidation section is not less than 90% and the pH of the upper solution of the oxidation section ranges from 4.5 to 6.7, while the oxidation rate of the lower solution of the oxidation section is not less than 99%, and the pH of the lower solution of the oxidation section ranges from 3 to 6.3.

In some embodiments, the empty tower gas velocity of the absorption tower is 2-5 m/s.

In some embodiments, the operating temperature of the washing desulfurization section ranges from 40 to 60°C.

In some embodiments, the operating temperature of the fine particulate matters control section ranges from 35 to 55°C.

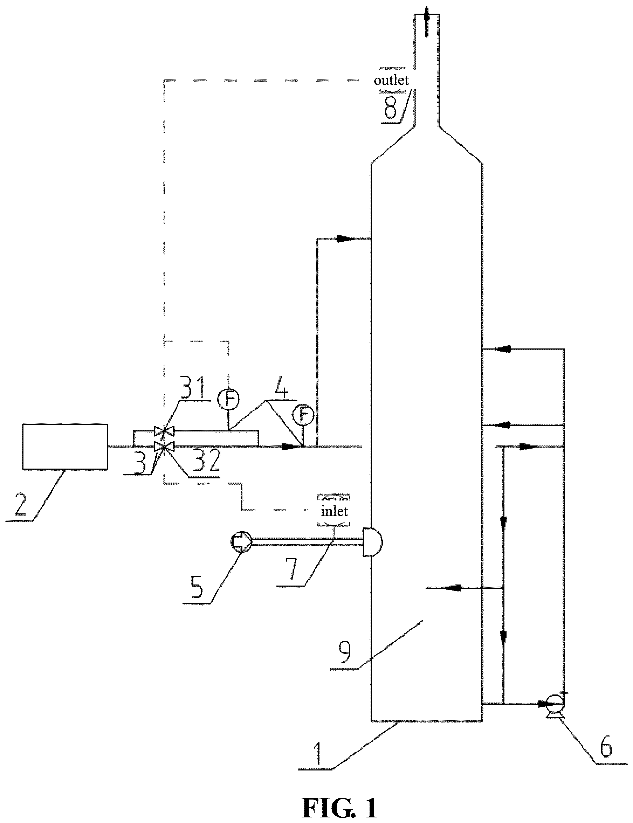

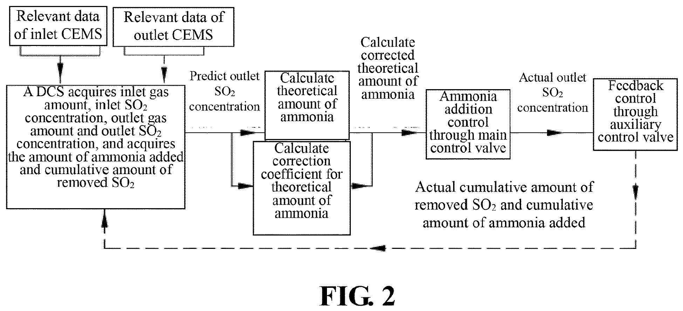

Here, a specific embodiment of the present invention is described with reference to Fig. 1 and Fig. 2, wherein the ammonia-based desulfurization device comprises an absorption tower 6 and an oxidation section 9, and the automatic ammonia-adding system comprises an ammonia supply system 2, an ammonia control valve 3, an ammonia metering means 4, a circulating pump 6, an inlet CEMS 7, an outlet CEMS 8

A Distributed Control System (DCS) automatically calculates a theoretical amount of ammonia using a microprocessor based on gas amounts provided by the inlet CEMS 7 and the outlet CEMS 8 (or associated gas amounts), a $SO_2$ concentration provided by the inlet CEMS 7 and a predetermined $SO_2$ concentration of the outlet CEMS 8; calculates a corrected theoretical amount of ammonia using half of the ratio of the actual amount of added ammonia to the actual amount of removed sulfur dioxide as a correction coefficient for the theoretical amount of ammonia; adds an ammonia absorbent equivalent to the corrected theoretical amount of ammonia $\pm10\%$, preferably $\pm5\%$, more preferably $\pm3\%$, and still more preferably $\pm2\%$, to the ammonia-based desulfurization device through the ammonia metering means 4 and the ammonia control valve 3; and then automatically controls the actual ammonia flow rate based on the actual $SO_2$ concentration and change trend provided by the outlet CEMS 8 as a feedback, thereby achieving automatic ammonia addition.

It is possible to use a slope of temporal curve of the outlet $SO_2$ value as the basis for consideration, and different further correction coefficients can be set at different slopes (the outlet $SO_2$ concentration change trend, e.g. less than 0, 0-1, 1-2, etc.).

The ammonia absorbent supplied by the ammonia supply system 2 may be 20% aqueous ammonia.

Double control valves may be used to control automatic ammonia addition. The inlets of the ammonia control valves 3 are connected to the ammonia supply system 2, the outlets of the ammonia control valves 3 are connected to the ammonia addition points, such as the oxidization section 9 and the circulation pump 6, and the amount of ammonia added through the main ammonia control valve is, for example, 98% of the corrected theoretical amount of ammonia.

The measured items for the inlet CEMS 7 may include gas amount, $SO_2$ concentration, water content, dust content, temperature and pressure.

The measured items for the outlet CEMS 8 may include gas amount, $SO_2$ concentration, water content, dust content, temperature, pressure, nitrogen oxides content and free ammonia content.

The ammonia supply system 2 may include an aqueous ammonia tank, an aqueous ammonia unloading pump, an aqueous ammonia supply pump, an accident spray device and a breathing gas washing tank. An aqueous ammonia having a concentration of 20wt.% may be supplied as an ammonia absorbent, and the ammonia metering means may be a mass flow meter.

The ammonia-based desulfurization process is as follows:

a raw flue gas 5 enters from the middle-lower part of the absorption tower 1, and is then emitted from a flue gas outlet on the top of the tower successively after cooling-and-washing, washing for desulfurization, and removing fine particulate matters by a washing liquid circulated by the circulation pump 6; and

the ammonia supply system 2 supplements the aqueous ammonia absorbent through a main ammonia control valve 31 and an auxiliary ammonia control valve 32 to the ammonia addition points, such as the oxidization section 9 and the circulation pump 6.

The circulating washing liquid is oxidized, then concentrated to a solid content of 10-20 wt.% in the cooling-and-washing process, and then processed to an ammonium sulfate product through an ammonium sulfate post-processing system.

In the ammonia-based desulfurization process, specific ammonia addition control steps are as follows:

1) uploading the gas amounts of the inlet CEMS 7 and the outlet CEMS 8 (or associated gas amounts), the $SO_2$ concentrations of the inlet CEMS 7 and the outlet CEMS 8, and the ammonia metering data to the distributed control system (DCS), wherein the water content, temperature and pressure data of the inlet CEMS and the outlet CEMS can be used for the gas amount correction calculation;

2) predetermining the outlet $SO_2$ concentration by the DCS;

3) calculating the theoretical amount of ammonia to be added;

4) calculating the correction coefficient for the theoretical amount of ammonia;

5) calculating the corrected theoretical amount of ammonia;

6) controlling the ammonia flow rate to be 98% of the corrected theoretical amount of ammonia through the mass flow meter 4 and the main ammonia control valve 31 ;

7) acquiring the actual $SO_2$ concentration of the outlet CEMS 8 by the DCS;

8) controlling the auxiliary ammonia control valve 32 based on the actual $SO_2$ concentration and change trend of the outlet CEMS 8 as a feedback to allow the outlet $SO_2$ concentration to tend towards the predetermined $SO_2$ concentration; and

9) acquiring the actual ammonia flow rate and integrating and acquiring the actual amount of removed sulfur dioxide and integrating by the DCS to conduct the next round of control.

In another aspect, the present invention provides an automatic ammonia-adding method for an ammonia-based desulfurization device, comprising:

automatically calculating a theoretical amount of ammonia to be added from gas amounts provided by an inlet CEMS and an outlet CEMS of the ammonia-based desulfurization device (or associated gas amounts), a $SO_2$ concentration provided by the inlet CEMS, and a predetermined $SO_2$ concentration of the outlet CEMS;

calculating a corrected theoretical amount of ammonia using half of the ratio of the actual amount of added ammonia to the actual amount of removed sulfur dioxide as a correction coefficient for the theoretical amount of ammonia; and

adding an ammonia absorbent equivalent to the corrected theoretical amount of ammonia $\pm 10\%$, preferably $\pm 5\%$, more preferably $\pm 3\%$, and still more preferably $\pm 2\%$, to the ammonia-based desulfurization device through an ammonia metering means and an ammonia control valve, and then automatically controlling the actual ammonia flow rate based on the actual $SO_2$ concentration and change trend provided by the outlet CEMS as a feedback, thereby achieving automatic ammonia addition.

The details and preferences of the present automatic ammonia-adding method are the same as described above for the present automatic ammonia-adding system.
The technique of the present invention improves the automation degree of the ammonia-based desulfurization device through automatic ammonia addition, will not have the $SO_2$ concentration and total dust in the outlet clean flue gas exceeding standard because of inlet gas amount and $SO_2$ concentration fluctuations, makes full use of the measured items at the inlet and outlet CEMSs and automatic statistics and computing function of the distributed control system, and reduces investment.
Under the conditions that the $SO_2$ concentration is not more than 30000 mg/Nm$^3$ and the total dust concentration is not more than 50 mg/Nm$^3$ in the raw flue gas, the ammonia-based desulfurization device may achieve a $SO_2$ concentration in the clean flue gas of no more than 35 mg/Nm$^3$, a total dust (including aerosol) concentration in the clean flue gas of no more than 5 mg/Nm$^3$, an ammonia slip in the clean flue gas of no more than 3 mg/Nm$^3$, and an ammonia recovery of no less than 99%.

Embodiments

The following embodiments are provided to illustrate the present invention, rather than limiting the scope of the present invention.

Embodiment 1

A raw flue gas was treated by using an ammonia-based desulfurization device including an automatic ammonia addition system of the present invention as shown in Fig. 1, wherein 1 is an absorption tower, 2 is an ammonia supply system, 3 is an ammonia control valve, 4 is a mass flow meter as an ammonia metering means, 5 is the raw flue gas, 6 is a circulating pump, 7 is an inlet CEMS, 8 is an outlet CEMS, and 9 is an oxidation section. The gas amount of the raw flue gas is 360000-510000 Nm$^3$/h, the $SO_2$ concentration is 1000-30000 mg/Nm$^3$, and the total dust concentration is 15-30 mg/Nm$^3$.
An ammonia absorbent supplied by the ammonia supply system 2 is liquid ammonia.
Double control valves, i.e, a main ammonia control valve 31 and an auxiliary ammonia control valve 32, are used to control automatic ammonia addition, wherein the inlets of the ammonia control valves 3 are connected to the ammonia supply system 2, the outlets of the ammonia control valves 3 are connected to the ammonia addition points, such as the oxidization section 9 and the circulation pump 6, and the amount of ammonia added through the main ammonia control valve 31 is 99% of the corrected theoretical amount of ammonia.
The absorption tower 1 is divided into the oxidation section 9, a cooling-and-washing section, a washing desulfurization section, and a fine particulate matters control section, and is section-wise controlled, wherein the cooling-and-washing section, the washing desulfurization section, and the fine particulate matters control section are respectively provided with 2/4/2 spray layers 21, the cooling-and-washing section concentrates the circulated washing liquid while cooling the raw flue gas 5, the washing desulfurization section removes by absorption sulfur dioxide in the flue gas, inhibits ammonia slip and aerosol formation, and the fine particulate matters control section scrubs off the fine particulate matters.

The ammonia-containing desulfurization agent is added at the following locations: upper and lower layers of the oxidation section 9, and optionally inlet and outlet of the circulating pump 6, wherein the amount added at the upper layer of the oxidation section 9 is 60-90% of the total weight, the amount added at the lower layer of the oxidation section 9 is 10-30% of the total weight, and the amount added at the inlet and outlet of the circulating pump 6 is 0-15% of the total weight.

In the liquid distributor of the washing desulfurization section, the liquid-to-gas ratio in each layer is 1.2 L/m$^3$, the spray coverage in each layer is 200%, and the total spray coverage in the absorption section is 650%.

In the fine particulate matters control section, the liquid-to-gas ratio in each layer is 1.1 L/m$^3$, and the spray coverage is 180%.

The upper part of the absorption section is provided with a 2-layer demister 12, including 1 layer of ridge and 1 layer of baffle; the upper part of the fine particulate matters control section is provided with a 3-layer demister, including 2 layers of ridges and 1 layer of screen. The measured items for the inlet CEMS 7 include gas amount, $SO_2$ concentration, $NO_x$ content, water content, dust content, temperature and pressure.

The measured items for the outlet CEMS 8 include gas amount, $SO_2$ concentration, water content, dust content, temperature, pressure, nitrogen oxides content and free ammonia content.

The ammonia supply system 2 includes a liquid ammonia spherical tank, an ammonia unloading compressor, an ammonia supply pump and an accident spray device, and the ammonia metering means 4 is a mass flow meter.

The process flow is as follows:

the raw flue gas 5 enters from the middle-lower part of the absorption tower 1, and is then emitted from the flue gas outlet on the top of the tower successively after cooling-and-washing, washing for desulfurization, and removing fine particulate matters by a washing liquid circulated by the circulating pump 6; and

the ammonia supply system 2 supplements the liquid ammonia absorbent through the main ammonia control valve 31 and the auxiliary ammonia control valve 32 to the ammonia addition points, such as the oxidization section 9 and the circulation pump 6.

The circulating washing liquid is oxidized, then concentrated to a solid content of 15 wt.% in the cooling-and-washing process, and then processed to an ammonium sulfate product through an ammonium sulfate post-processing system.

The circulating liquid for absorption is oxidized by compressed air in the oxidation section 9, whereby sulfite contained therein is oxidized into sulfate. The upper solution of the oxidation section 9 has an oxidation rate of 95%, a density of 1.12 g/L, and a pH of 5.6, while the lower solution has an oxidation rate of 99.2%, a density of 1.13 g/L, and a pH of 4.7.

The empty tower gas velocity of the absorption tower 1 is 2.85 m/s.

The operating temperature of the washing desulfurization section is 51°C.

The operating temperature of the fine particulate matters control section is 49°C.

Specific control steps are as follows:

1) acquiring relevant data by a DCS: an inlet gas amount of 395000 Nm$^3$/h, an inlet $SO_2$ concentration of 2112 mg/Nm$^3$, an outlet gas amount of 405000 Nm$^3$/h, an outlet $SO_2$ concentration of 24 mg/Nm$^3$, an actual cumulative amount of added liquid ammonia of 1940 t, and an actual cumulative amount of removed sulfur dioxide of 3653 t;

2) predetermining the outlet $SO_2$ concentration of 23.9 mg/Nm$^3$ by the DCS;

3) calculating a theoretical amount of ammonia = (395000*2112 - 405000*23.9)/1000/1000/64*34 = 438 kg/h;

4) calculating a correction coefficient for the theoretical amount of ammonia = 1940/34/3653*64 = 0.9997;

5) calculating a corrected theoretical amount of ammonia = 438*0.9997 = 437.85 kg/h;

6) adding the liquid ammonia at a flow rate of 433.47 kg/h (i.e., 437.85 kg/h*0.99) through the mass flow meter 4 and the main ammonia control valve 31;

7) acquiring the actual $SO_2$ concentration of the outlet CEMS 8, 23.9 mg/Nm$^3$;

8) controlling the auxiliary ammonia control valve 32 based on the actual $SO_2$ concentration and change trend of the outlet CEMS 8 as a feedback to control the outlet $SO_2$ concentration to 23.5 mg/Nm$^3$; and

9) acquiring actual total ammonia flow rate of 438 kg/h and integrating and acquiring the actual amount of removed sulfur dioxide and integrating, to conduct the next round of control.

When a change rate of a product of the inlet gas amount and the inlet $SO_2$ concentration is less than or equal to 2%, the openness degree of the main ammonia control valve 31 remains unchanged, and the actual $SO_2$ value of the outlet CEMS 8 is controlled to 20-25 mg/Nm$^3$ through the auxiliary ammonia control valve 32. When the change rate of the product of the inlet gas amount and the inlet $SO_2$ concentration is more than 2%, the openness degree of the main ammonia control valve 31 is calculated and adjusted according to the above steps, and the actual $SO_2$ value of the outlet CEMS 8 is controlled to 20-25 mg/Nm$^3$ by controlling the auxiliary ammonia control valve 32.

Technical effects: in the clean flue gas, $SO_2$: 23.6 mg/Nm$^3$, total dust (including aerosol): 1.9 mg/Nm$^3$, ammonia slip: 0.55 mg/Nm$^3$; and ammonia recovery: 99.4%.

Although particular embodiments of the present invention have been described above, it would be appreciated by those skilled in the art that these are only illustrative description, and the scope of protection of the present invention is limited by the accompanying claims.

## Claims

1. An ammonia-based desulfurization device comprising an automatic ammonia-adding system and configured for using multi-stage control, wherein the automatic ammonia-adding system is configured to:

   automatically calculate a theoretical amount of ammonia to be added based on gas amounts provided by an inlet continuous emission monitoring system (CEMS) and an outlet CEMS of the ammonia-based desulfurization device or an associated gas amount, which is a gas amount calculated from a boiler load and a boiler air amount, a $SO_2$ concentration provided by the inlet CEMS, and a predetermined $SO_2$ concentration of the outlet CEMS;
   calculate a corrected theoretical amount of ammonia using half of the ratio of the actual amount of added ammonia to the actual amount of removed sulfur dioxide as a correction coefficient for the theoretical amount of ammonia;
   add an ammonia absorbent equivalent to the corrected theoretical amount of ammonia $\pm 10\%$ to the ammonia-based desulfurization device through an ammonia metering means and ammonia control valves; and
   then automatically control the actual ammonia flow rate based on the actual $SO_2$ concentration and change trend provided by the outlet CEMS as a feedback to allow the outlet $SO_2$ concentration to tend towards the predetermined $SO_2$ concentration, thereby achieving automatic ammonia addition,
   wherein the ammonia-based desulfurization device further comprises an absorption tower and an oxidation section, and the automatic ammonia-adding system comprises an ammonia supply system, ammonia control valves, an ammonia metering means, a circulating pump, an inlet CEMS, and an outlet CEMS, the automatic ammonia-adding system further comprising a Distributed Control System (DCS) configured for receiving the gas amounts of the inlet and outlet CEMS or associated gas amounts, the $SO_2$ concentrations of the inlet and the predetermined $SO_2$ concentrations of the outlet CEMSs, and the data of the ammonia metering to calculate the actual amount of added ammonia and the actual amount of removed sulfur dioxide, and then calculate the theoretical amount of ammonia to be added, the correction coefficient for the amount of ammonia, and the corrected theoretical amount of ammonia,
   wherein the theoretical amount of ammonia to be added, the correction coefficient for the theoretical amount of ammonia, and the corrected theoretical amount of ammonia are calculated as follows:

   theoretical amount of ammonia = gas amount of the inlet CEMS or associated gas amount Nm$^3$/h * inlet $SO_2$ concentration mg/Nm$^3$ - gas amount of the outlet CEMS or associated gas amount Nm$^3$/h * predetermined $SO_2$ concentration of the outlet CEMS mg/Nm$^3$/1000/ 1000/64*34 kg/h correction coefficient for theoretical amount of ammonia = ratio of actual molar number of added ammonia to actual molar number of removed sulfur dioxide/2 corrected theoretical amount of ammonia = theoretical amount of ammonia * correction coefficient for theoretical amount of ammonia,

and wherein the associated gas amount is one calculated from a boiler load and a boiler air amount.

2. The ammonia-based desulfurization device according to claim 1, having at least one of the following characteristics:

- the ammonia supply system is configured for supplying the ammonia absorbent, which is one or more of liquid ammonia, aqueous ammonia and gas ammonia;
- the ammonia metering means is a flow meter and/or a metering pump;
- the inlet CEMS is configured for further measuring water content, temperature and pressure;
- the outlet CEMS is configured for further measuring water content, temperature and pressure.

3. The ammonia-based desulfurization device according to claim 1, wherein the automatic ammonia-adding system comprises, as the ammonia control valves, at least a first ammonia control valve and a second ammonia control valve, wherein the first control valve is used to control the addition of 90-99% of corrected theoretical amount of ammonia, and the second control valve is used for automatic feedback adjustment and control.

4. The ammonia-based desulfurization device according to claim 1, wherein the automatic ammonia-adding system comprises two ammonia control valves.

5. An automatic ammonia-adding method for the ammonia-based desulfurization device according to claims 1 to 4, comprising:

automatically calculating a theoretical amount of ammonia to be added from gas amounts provided by an inlet CEMS and an outlet CEMS of the ammonia-based desulfurization device or an associated gas amount, a $SO_2$ concentration provided by the inlet CEMS, and a predetermined $SO_2$ concentration of the outlet CEMS;
calculating a corrected theoretical amount of ammonia using half of the ratio of the actual amount of added ammonia to the actual amount of removed sulfur dioxide as a correction coefficient for the theoretical amount of ammonia; and
adding an ammonia absorbent equivalent to the corrected theoretical amount of ammonia ±10%, preferably ±5%, more preferably ±3%, and still more preferably ±2%, to the ammonia-based desulfurization device through an ammonia metering means and ammonia control valves, and then automatically controlling the actual ammonia flow rate based on the actual $SO_2$ concentration and change trend provided by the outlet CEMS as a feedback to allow the outlet $SO_2$ concentration to tend towards the predetermined $SO_2$ concentration, thereby achieving automatic ammonia addition,
wherein the theoretical amount of ammonia to be added, the correction coefficient for the theoretical amount of ammonia, and the corrected theoretical amount of ammonia are calculated as follows:

theoretical amount of ammonia = gas amount of the inlet CEMS or associated gas amount $Nm^3$/h * inlet $SO_2$ concentration mg/$Nm^3$ - gas amount of the outlet CEMS or associated gas amount $Nm^3$/h * predetermined $SO_2$ concentration of the outlet CEMS mg/$Nm^3$/1000/1000/64 * 34 kg/h correction coefficient for theoretical amount of ammonia = ratio of actual molar number of added ammonia to actual molar number of removed sulfur dioxide/2 corrected theoretical amount of ammonia = theoretical amount of ammonia * correction coefficient for theoretical amount of ammonia,

and wherein the associated gas amount is one calculated from a boiler load or a boiler air amount.

6. The automatic ammonia-adding method according to claim 5, having at least one of the following characteristics:

- the ammonia absorbent supplied by the ammonia supply system is one or more of liquid ammonia, aqueous ammonia and gas ammonia;
- the ammonia metering means is a flow meter and/or a metering pump;
- measured items for the inlet CEMS further include water content, temperature and pressure;
- measured items for the outlet CEMS further include water content, temperature and pressure; and
- the associated gas amount, e.g. a gas amount calculated from a boiler load and a boiler air amount, is used to replace gas amounts of the inlet and outlet CEMSs.

7.  The automatic ammonia-adding method according to claim 5, wherein the ammonia control valves comprise at least a first ammonia control valve and a second ammonia control valve, wherein the first control valve is used to control the addition of 90-99% of corrected theoretical amount of ammonia, and the second control valve is used for automatic feedback adjustment and control.

8.  The automatic ammonia-adding method according to claim 5, wherein the gas amount of the inlet CEMS is used to substitute for the gas amount of the outlet CEMS or vice versa, and water content, temperature and pressure data of the inlet and outlet CEMSs are used for gas amount correction calculation.

9.  The automatic ammonia-adding method according to claim 5, wherein the ammonia control valves comprise two control valves.

**Patentansprüche**

1.  Auf Ammoniak basierende Entschwefelungsvorrichtung umfassend ein automatisches Ammoniak-Zudosiersystem umfasst und die dazu konfiguriert ist, eine mehrstufige Steuerung zu verwenden, wobei das automatische Ammoniak-Zudosiersystem dazu konfiguriert ist, um:

    automatisch einer theoretischen Ammoniakmenge zu berechnen, die basierend auf den Gasmengen, die von einem kontinuerlichen Einlassemissionsüberwachungssystem (CEMS) und einem Auslass CEMS der auf Ammoniak basierenden Entschwefelungsvorrichtung oder einer zugeordneten Gasmenge bereitgestellt werden, zugegeben werden muss, die eine Gasmenge ist, die aus einer Kessellast und einer Kesselluftmenge berechnet wird, einer $SO_2$-Konzentration, die von dem Einlass CEMS bereitgestellt wird, und einer vorbestimmten $SO_2$-Konzentration des Auslass CEMS;
    eine korrigierte theoretische Ammoniakmenge zu berechnen, wobei die Hälfte des Verhältnisses der tatsächlich zugegebenen Ammoniakmenge zu der tatsächlich entfernten Schwefeldioxidmenge als Korrekturkoeffizient für die theoretische Ammoniakmenge verwendet wird;
    ein Ammoniak-Absorptionsmittel, das der korrigierten theoretischen Ammoniakmenge $\pm 10\,\%$ entspricht, durch ein Ammoniak-Dosiermittel und Ammoniak-Steuerventile in die auf Ammoniak basierende Entschwefelungsvorrichtung zudosieren; und
    anschließend automatisch die tatsächliche Ammoniakflussrate basierend auf der $SO_2$-Konzentration und Änderungsneigung, die durch das Auslass-CEMS bereitgestellt wird, zu steuern, um die $SO_2$-Konzentration zu erlauben, zu der vorbestimmten $SO_2$-Konzentration zu neigen, wodurch eine automatische Ammoniakzugabe erhalten wird,
    wobei die auf Ammoniak basierende Entschwefelungsvorrichtung ferner eine Absorptionsturm und einen Oxidationsabschnitt umfasst, und das automatische Ammoniak-Zudosiersystem ein Ammoniak-Zufuhrsystem, Ammoniak-Steuerventile, ein Ammoniak-Dosiermittel, eine Umwälzpumpe, ein Einlass-CEMS und ein Auslass-CEMS umfasst, wobei das automatische Ammoniak-Zudosiersystem ferner ein Verteiltes Steuerungssystem (DCS) umfasst, das dazu konfiguriert ist, die Gasmengen des Einlass- und Auslass-CEMS oder zugeordnete Gasmengen, die $SO_2$-Konzentrationen des Einlass-CEMS und die vorbestimmten $SO_2$-Konzentrationen der Auslass-CEMS sowie die Daten der Ammoniakmessung zu empfangen, um die tatsächlich zugegebene Ammoniakmenge und die tatsächlich entfernte Schwefeldioxidmenge zu berechnen, und anschließend die theoretisch zudosierende Ammoniakmenge, den Korrekturkoeffizienten der Ammoniakmenge und die korrigierte theoretische Ammoniakmenge zu berechnen,
    wobei die theoretisch zudosierende Ammoniakmenge, der Korrekturkoeffizient für die theoretische Ammoniakmenge und die korrigierte theoretische Ammoniakmenge wie folgt berechnet werden:

    theoretische Ammoniakmenge = Gasmenge des Einlass-CEMS oder zugeordnete Gasmenge $Nm^3$/h * Einlass-$SO_2$-Konzentration mg/$Nm^3$ - Gasmenge des Auslass-CEMS oder zugeordnete Gasmenge $Nm^3$/h * vorbestimmte $SO_2$-Konzentration des Auslass-CEMS mg/$Nm^3$ /1000 /1000 /64*34 kg/h Korrekturkoeffizient für die theoretische Ammoniakmenge = Verhältnis der tatsächlichen molaren Anzahl des zugegebenen Ammoniaks zu der tatsächlichen molaren Anzahl des entfernten Schwefeldioxids/2 korrigierte theoretische Ammoniakmenge = theoretische Ammoniakmenge * Korrekturkoeffizient für die theoretische Ammoniakmenge,

und wobei der zugeordnete Gasmenge einer ist, die aus einer Kessellast und einer Kesselluftmenge berechnet wird.

2. Auf Ammoniak basierende Entschwefelungsvorrichtung nach Anspruch 1, mit mindestens einem der folgenden Merkmale:

- das Ammoniak-Zufuhrsystem ist dazu konfiguriert, das Ammoniak-Absorptionsmittels zuzuführen, das eines oder mehrere der folgenden umfasst:
flüssigförmiges Ammoniak, wasserförmiges Ammoniak und gasförmiges Ammoniak;
- die Ammoniak-Dosiermittel ist ein Durchflussmesser und/oder eine Dosierpumpe;
- das Einlass-CEMS ist konfiguriert, weiter den Wassergehalt, die Temperatur und den Drucks zu messen;
- das Auslass-CEMS ist konfiguriert, den Wassergehalts, die Temperatur und den Druck zu messen.

3. Auf Ammoniak basierende Entschwefelungsvorrichtung nach Anspruch 1, wobei das automatische Ammoniak-Zudosiersystem als Ammoniak-Steuerventile mindestens ein erstes Ammoniak-Steuerventil und ein zweites Ammoniak-Steuerventil umfasst, wobei das erste Steuerventil zum Steuern der Zugabe von 90-99 % der korrigierten theoretischen Ammoniakmenge verwendet wird, und das zweite Steuerventil zur automatischen Feedbackeinstellung verwendet wird.

4. Auf Ammoniak basierende Entschwefelungsvorrichtung nach Anspruch 1, wobei das automatische Ammoniak-Zudosiersystem zwei Ammoniak-Steuerventile umfasst.

5. Automatisches Ammoniak-Zudosierverfahren für die auf Ammoniak basierende Entschwefelungsvorrichtung nach den Ansprüchen 1 bis 4, umfassend:

Berechnen automatisch einer theoretisch zu dosierenden Ammoniakmenge, die von Gasmengen zugegeben werden müssen, die von einem Einlass-CEMS und einem Auslass-CEMS der auf Ammoniak basierenden Entschwefelungsvorrichtung bereitgestellt werden Gasmengen oder einer zugeordneten Gasmenge, einer $SO_2$-Konzentration, die von dem Einlass CEMS bereitgestellt wird und einer vorbestimmten $SO_2$-Konzentration des Auslass-CEMS;
Berechnen einer korrigierten theoretischen Ammoniakmenge unter Verwendung der Hälfte des Verhältnisses der tatsächlich zugegebenen Ammoniakmenge zu der tatsächlich entfernten Schwefeldioxidmenge als Korrekturkoeffizient für die theoretische Ammoniakmenge; und
Zudosieren eines Ammoniak-Absorptionsmittels, das der korrigierten theoretischen Ammoniakmenge $\pm$10 %, vorzugsweise $\pm$5 %, noch bevorzugter $\pm$3 % und besonders bevorzugt $\pm$2 % entspricht, in die auf Ammoniak basierende Entschwefelungsvorrichtung über ein Ammoniak-Dosiermittel und Ammoniak-Steuerventile, und anschließend Steuern automatisch der tatsächlichen Ammoniakflussrate basierend auf der tatsächlichen $SO_2$-Konzentration und der Änderungsneigung, die von dem Auslass CEMS als Feedback bereitgestellt wird, sodass der Auslass $SO_2$-Konzentration zu erlauben, zu der vorbestimmten $SO_2$-Konzentration zu neigen und damit eine automatische Ammoniakzugabe erhalten wird,
wobei die theoretische Ammoniakmenge, der Korrekturkoeffizient für die theoretische Ammoniakmenge und die korrigierte theoretische Ammoniakmenge wie folgt berechnet werden:

theoretische Ammoniakmenge = Gasmenge des Einlass-CEMS oder zugeordnete Gasmenge $Nm^3$/h * Einlass $SO_2$-Konzentration $mg/Nm^3$ - Gasmenge des Auslass-CEMS oder zugeordnete Gasmenge $Nm^3$/h * vorbestimmte $SO_2$-Konzentration des Auslass-CEMS $mg/Nm^3$ /1000 /1000 164 * 34 kg/h Korrekturkoeffizient für die theoretische Ammoniakmenge = Verhältnis der tatsächlichen molaren Anzahl des zugegebenen Ammoniaks zu der tatsächlichen molaren Anzahl des entfernten Schwefeldioxids/2 korrigierte theoretische Ammoniakmenge = theoretische Ammoniakmenge * Korrekturkoeffizient für die theoretische Ammoniakmenge,

und wobei die zugeordnete Gasmenge eine ist, die aus einer Kessellast oder einer Kesselluftmenge berechnet wird.

6.  Automatisches Ammoniak-Zudosierverfahren nach Anspruch 5, mit mindestens einem der folgenden Merkmale:

    - das Ammoniak-Absorptionsmittel, das von dem Ammoniak Versorgungssystem versorgt wird, ist eines oder mehrere der folgenden: flüssigförmiges Ammoniak, wasserförmiges Ammoniak und gasförmiges Ammoniak;
    - das Ammoniak-Dosiermittel ist ein Durchflussmesser und/oder eine Dosierpumpe;
    - Messen Größen für das Einlass-CEMS ferner umfassen Wassergehalt, Temperatur und Druck;
    - Messen Größen für das Auslass-CEMS ferner umfassen Wassergehalt, Temperatur und Druck; und
    - die zugeordnete Gasmenge, beispielweise eine Gasmenge, die aus einer Kessellast und einer Kesselluftmenge berechnet wird, wird verwendet, um Gasmengen des Einlass- und Auslass-CEMS zu ersetzen.

7.  Automatisches Ammoniak-Zudosierverfahren nach Anspruch 5, wobei die Ammoniak-Steuerventile mindestens ein erstes Ammoniak-Steuerventil und ein zweites Ammoniak-Steuerventil umfassen, wobei das erste Steuerventil zum Steuern der Zugabe von 90-99 % der korrigierten theoretischen Ammoniakmenge verwendet wird, und das zweite Steuerventil zur automatischen Feedbackeinstellung verwendet wird.

8.  Automatisches Ammoniak-Zudosierverfahren nach Anspruch 5, wobei die Gasmenge des Einlass-CEMS verwendet wird, um die Gasmenge des Auslass-CEMS zu ersetzen oder umgekehrt, und wobei Wassergehalt-, Temperatur- und Druckdaten des Einlass und Auslass-CEMS zu der Gasmengekorrektur-Berechnung verwendet werden.

9.  Automatisches Ammoniak-Zudosierverfahren nach Anspruch 5, wobei die Ammoniak-Steuerventile zwei Steuerventile umfassen.

**Revendications**

1.  Dispositif de désulfuration à base d'ammoniac comprenant un système d'addition automatique d'ammoniac et configuré pour utiliser un contrôle à plusieurs étapes, dans lequel le système d'addition automatique d'ammoniac est configuré pour :

    calculer automatiquement une quantité théorique d'ammoniac à ajouter sur la base des quantités de gaz fournies par un système de surveillance continue des émissions (CEMS) d'entrée et un CEMS de sortie du dispositif de désulfuration à base d'ammoniac ou d'une quantité de gaz associée, qui est une quantité de gaz calculée à partir d'une charge de chaudière et d'une quantité d'air de chaudière, une concentration de $SO_2$ fournie par le CEMS d'entrée, et une concentration prédéterminée de $SO_2$ du CEMS de sortie ;
    calculer une quantité théorique corrigée d'ammoniac en utilisant la moitié du rapport entre la quantité réelle d'ammoniac ajoutée et la quantité réelle de dioxyde de soufre éliminée comme coefficient de correction pour la quantité théorique d'ammoniac ;
    ajouter un absorbant d'ammoniac équivalent à la quantité théorique corrigée d'ammoniac $\pm 10$ % au dispositif de désulfuration à base d'ammoniac à travers un moyen de dosage d'ammoniac et des vannes de commande d'ammoniac ; et
    contrôler ensuite automatiquement le débit réel d'ammoniac sur la base de la concentration réelle de $SO_2$ et de la tendance de variation fournies par le CEMS de sortie comme rétroaction afin de permettre à la concentration de $SO_2$ en sortie de tendre vers la concentration prédéterminée de $SO_2$, réalisant ainsi l'addition automatique d'ammoniac,
    dans lequel le dispositif de désulfuration à base d'ammoniac comprend en outre une tour d'absorption et une section d'oxydation, et le système d'addition automatique d'ammoniac comprend un système d'alimentation en ammoniac, des vannes de commande d'ammoniac, un moyen de dosage d'ammoniac, une pompe de circulation, un CEMS d'entrée et un CEMS de sortie, le système d'addition automatique d'ammoniac comprenant en outre un système de contrôle distribué (Distributed Control System, DCS) configuré pour recevoir les quantités de gaz des CEMS d'entrée et de sortie ou des quantités de gaz associées, les concentrations de $SO_2$ du CEMS d'entrée et les concentrations prédéterminées de $SO_2$ des CEMS de sortie, et les données de dosage d'ammoniac pour calculer la quantité réelle d'ammoniac ajoutée et la quantité réelle de dioxyde de soufre éliminée, puis calculer la quantité théorique d'ammoniac à ajouter, le coefficient de correction de la quantité d'ammoniac, et la quantité théorique corrigée d'ammoniac,
    dans lequel la quantité théorique d'ammoniac à ajouter, le coefficient de correction pour la quantité théorique d'ammoniac, et la quantité théorique corrigée d'ammoniac sont calculés comme suit :

quantité théorique d'ammoniac = quantité de gaz du CEMS d'entrée ou quantité de gaz associée Nm³/h * concentration d'entrée de $SO_2$ mg/Nm³ - quantité de gaz du CEMS de sortie ou quantité de gaz associée Nm³/h * concentration prédéterminée de $SO_2$ du CEMS de sortie mg/Nm³ /1000 /1000 /64*34 kg/h coefficient de correction pour la quantité théorique d'ammoniac = rapport entre le nombre molaire réel d'ammoniac ajouté et le nombre molaire réel de dioxyde de soufre éliminé/2 quantité théorique corrigée d'ammoniac = quantité théorique d'ammoniac * coefficient de correction pour la quantité théorique d'ammoniac,

et dans lequel la quantité de gaz associée est une quantité calculée à partir d'une charge de chaudière et d'une quantité d'air de chaudière.

2. Le dispositif de désulfuration à base d'ammoniac selon la revendication 1, présentant au moins une des caractéristiques suivantes :

- le système d'alimentation en ammoniac est configuré pour alimenter l'absorbant d'ammoniac, qui est un ou plusieurs parmi l'ammoniac liquide, l'ammoniac aqueux et l'ammoniac gazeux ;
- le moyen de dosage d'ammoniac est un débitmètre et/ou une pompe doseuse ;
- le CEMS d'entrée est configuré pour mesurer en outre la teneur en eau, la température et la pression ;
- le CEMS de sortie est configuré pour mesurer en outre la teneur en eau, la température et la pression.

3. Le dispositif de désulfuration à base d'ammoniac selon la revendication 1, dans lequel le système d'addition automatique d'ammoniac comprend, en tant que vannes de commande d'ammoniac, au moins une première vanne de commande d'ammoniac et une seconde vanne de commande d'ammoniac, dans lequel la première vanne de commande est utilisée pour contrôler l'addition de 90-99 % de la quantité théorique corrigée d'ammoniac, et la seconde vanne de commande est utilisée pour un réglage et un contrôle automatiques par rétroaction.

4. Le dispositif de désulfuration à base d'ammoniac selon la revendication 1, dans lequel le système d'addition automatique d'ammoniac comprend deux vannes de commande d'ammoniac.

5. Procédé automatique d'addition d'ammoniac pour le dispositif de désulfuration à base d'ammoniac selon les revendications 1 à 4, comprenant :

le calcul automatique d'une quantité théorique d'ammoniac à ajouter à partir des quantités de gaz fournies par un CEMS d'entrée et un CEMS de sortie du dispositif de désulfuration à base d'ammoniac ou d'une quantité de gaz associée, une concentration de $SO_2$ fournie par le CEMS d'entrée, et une concentration prédéterminée de $SO_2$ du CEMS de sortie ;
le calcul d'une quantité théorique corrigée d'ammoniac en utilisant la moitié du rapport entre la quantité réelle d'ammoniac ajoutée et la quantité réelle de dioxyde de soufre éliminée comme coefficient de correction pour la quantité théorique d'ammoniac ; et
l'addition d'un absorbant d'ammoniac équivalent à la quantité théorique corrigée d'ammoniac $\pm 10$ %, de préférence $\pm 5$ %, plus préférablement $\pm 3$ %, et encore plus préférablement $\pm 2$ %, au dispositif de désulfuration à base d'ammoniac à travers un moyen de dosage d'ammoniac et des vannes de commande d'ammoniac, et ensuite le contrôle automatique du débit réel d'ammoniac sur la base de la concentration réelle de $SO_2$ et de la tendance de variation fournies par le CEMS de sortie comme rétroaction afin de permettre à la concentration de $SO_2$ en sortie de tendre vers la concentration prédéterminée de SO2, réalisant ainsi l'addition automatique d'ammoniac,
dans lequel la quantité théorique d'ammoniac à ajouter, le coefficient de correction pour la quantité théorique d'ammoniac, et la quantité théorique corrigée d'ammoniac sont calculés comme suit :

quantité théorique d'ammoniac = quantité de gaz du CEMS d'entrée ou quantité de gaz associée Nm³/h * concentration d'entrée de $SO_2$ mg/Nm³ - quantité de gaz du CEMS de sortie ou quantité de gaz associée Nm³/h * concentration prédéterminée de $SO_2$ du CEMS de sortie mg/Nm³ /1000 /1000 /64 * 34 kg/h coefficient de correction pour la quantité théorique d'ammoniac = rapport entre le nombre molaire réel d'ammoniac ajouté et le nombre molaire réel de dioxyde de soufre éliminé/2 quantité théorique corrigée d'ammoniac = quantité théorique d'ammoniac * coefficient de correction pour la quantité théorique d'ammoniac,

et dans lequel la quantité de gaz associée est une quantité calculée à partir d'une charge de chaudière ou d'une quantité d'air de chaudière.

6. Procédé automatique d'addition d'ammoniac selon la revendication 5, présentant au moins une des caractéristiques suivantes :

- l'absorbant d'ammoniac fourni par le système d'alimentation en ammoniac est un ou plusieurs parmi l'ammoniac liquide, l'ammoniac aqueux et l'ammoniac gazeux ;
- le moyen de dosage d'ammoniac est un débitmètre et/ou une pompe doseuse ;
- les éléments mesurés pour le CEMS d'entrée comprennent en outre la teneur en eau, la température et la pression ;
- les éléments mesurés pour le CEMS de sortie comprennent en outre la teneur en eau, la température et la pression ; et
- la quantité de gaz associée, par exemple une quantité de gaz calculée à partir d'une charge de chaudière et d'une quantité d'air de chaudière, est utilisée pour remplacer les quantités de gaz des CEMS d'entrée et de sortie.

7. Procédé automatique d'addition d'ammoniac selon la revendication 5, dans lequel les vannes de commande d'ammoniac comprennent au moins une première vanne de commande d'ammoniac et une seconde vanne de commande d'ammoniac, dans lequel la première vanne de commande est utilisée pour contrôler l'addition de 90 à 99 % de la quantité théorique corrigée d'ammoniac, et la seconde vanne de commande est utilisée pour le réglage et le contrôle automatiques par rétroaction.

8. Procédé automatique d'addition d'ammoniac selon la revendication 5, dans lequel la quantité de gaz du CEMS d'entrée est utilisée pour remplacer la quantité de gaz du CEMS de sortie ou inversement, et les données de teneur en eau, température et pression des CEMS d'entrée et de sortie sont utilisées pour le calcul de correction de la quantité de gaz.

9. Procédé automatique d'addition d'ammoniac selon la revendication 5, dans lequel les vannes de commande d'ammoniac comprennent deux vannes de commande.

outlet

inlet

**FIG. 1**

| Relevant data of inlet CEMS | Relevant data of outlet CEMS |
|---|---|

Calculate corrected theoretical amount of ammonia

A DCS acquires inlet gas amount, inlet $SO_2$ concentration, outlet gas amount and outlet $SO_2$ concentration, and acquires the amount of ammonia added and cumulative amount of removed $SO_2$

Predict outlet $SO_2$ concentration

Calculate theoretical amount of ammonia

Calculate correction coefficient for theoretical amount of ammonia

Ammonia addition control through main control valve

Actual outlet $SO_2$ concentration

Feedback control through auxiliary control valve

Actual cumulative amount of removed $SO_2$ and cumulative amount of ammonia added

**FIG. 2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 1283346 C
- CN 1321723 C
- CN 100428979 C
- CN 201710154157
- CN 201610322999
- CN 203253348
- JP 2009279490 A